# FASCICULE DE BREVET EUROPEEN

(11) **EP 1 840 752 B1**
(45) Date de publication et mention de la délivrance du brevet: **02.04.2014**
(21) Numéro de dépôt: 07100794.2
(22) Date de dépôt: 19.01.2007
(51) Int. Cl.: G06F 13/42, G05B 19/04, B60R 16/02

(54) **Système et procédé de communication par bus de communication série**
Kommunikationssystem und verfahren über einen Serien-Kommunikationsbus
System and method for communicating using a serial communication bus

(30) Priorité: 27.01.2006 FR 0600740
(43) Date de publication de la demande: 03.10.2007
(73) Titulaire: Valeo Systèmes Thermiques, 78321 Le Mesnil St Denis Cedex (FR)
(72) Inventeur: Moreau, Fabrice Valeo Systèmes Thermiques, CRETEIL 94000 (FR); Autran, Frederic Valeo Systèmes Thermiques, PARIS 75018 (FR)
(74) Mandataire: Vieillevigne, Sébastien Nicolas Bernard

(56) Documents cités:
- EP-A- 1 191 747
- EP-A1- 1 571 032
- FR-A- 2 713 360
- US-A- 5 818 428
- US-A1- 2002 016 652

## Description

### Arrière-plan de l'invention

La présente invention se rapporte au domaine général des systèmes de communication par bus série.

L'invention vise plus spécifiquement un système et un procédé de communication entre une pluralité d'interfaces homme-machines (IHMs) et un module de commande, connectés par un bus de communication série, notamment dans le domaine automobile.

Les bus de communication série sont communément utilisés pour les communications entre les différents éléments électroniques présents dans un véhicule. Ces éléments électroniques sont par exemple, des capteurs, des indicateurs et des actionneurs, ainsi mis en réseau par l'intermédiaire de tels bus série.

Dans les applications automobiles, les capteurs et actionneurs concernent, par exemple, le système d'air conditionné, les portes (ouverture/fermeture/blocage), les ceintures, les sièges, les mesures de température, les commandes manuelles, les essuie-glaces, les déclencheurs de toit ouvrant.

Dans l'état actuel de la technique, un bus de communication série permet la communication entre des modules de commande d'équipement et des interfaces homme-machine (IHMs) contenues dans des tableaux de commande. Les traitements logiques liés aux IHMs consistent à élaborer des états à afficher par les IHMs sont effectués au niveau de chaque module de commande.

Cette répartition distribuée des traitements logiques liés aux IHMs complexifie l'architecture du système et peut présenter un surcoût de maintenance.

En outre, une modification de l'un quelconque des tableaux de commande induira des modifications au niveau de chacun des modules de commande.

Le document EP-A-1191747 décrit un système de communication entre une pluralité de senseurs/actuateurs relié d'un coté à un équipement et d'un autre coté à un calculateur au moyen d'un bus de communication série, ledit premier tableau de commande comprenant une première interface homme-machiné relié audit calculateur central par un bus interne. Le document EP-A-1571032 décrit un système de communication entre deux unités de commande.

### Objet de l'invention

Un aspect de l'invention est un système de communication tel que défini dans la revendication indépendante 1. Un autre aspect est une méthode de communication comme défini dans la revendication indépendante 6. D'autres modes de réalisation de l'invention sont spécifiés dans les revendications dépendantes attenantes.

Ainsi, le calculateur central permet de séparer le traitement des données en provenance des IHMs et des modules de commande d'équipement, des traitements de données classiques effectués par les modules de commande liés aux équipements.

Avantageusement, la centralisation du traitement des données émises par les IHMs au niveau du calculateur central selon l'invention, évite toute modification éventuelle au niveau des modules de commande d'équipements lors de l'adaptation des panneaux de commande ou de la modification des IHMs.

Les données produites par le calculateur central sont ensuite diffusées aux interfaces homme-machine et aux modules de commande, selon une transmission du type point à multipoints. Contrairement aux architectures de systèmes classiques, dans lesquelles des dialogues se réalisent point-à-point entre les modules de commande d'équipements et les différentes IHMs, la diffusion de données selon l'invention réalise une transmission du type point à multi-points, permettant ainsi de simplifier la mise en oeuvre des communications. Les données sont recueillies par le calculateur central en provenance des IHMs et modules de commande par une transmission du type multi-points à point.

Selon une caractéristique de l'invention, le calculateur central est placé dans un tableau de commande comprenant au moins une interface homme-machine.

Avantageusement, le calculateur central est placé dans l'un quelconque des tableaux de commande reliés au bus de communication, chacun de ces tableaux de commande comportant déjà au moins une IHM.

Selon une autre caractéristique de l'invention, le calculateur central comprend un moyen de stockage permettant de stocker des informations de configuration.

Ainsi le calculateur central utilise des informations de configuration qu'il stocke grâce à un moyen de stockage. De telles informations peuvent être utilisées par le calculateur pour le traitement des données reçues par les IHMs ou par le module de commande d'équipement.

Selon une autre caractéristique de l'invention, le bus de communication série est un bus de type LIN (Local Interconnect Network).

Les bus de communication série de type LIN (Local Interconnect Network) présentent les avantages suivants.

Tout d'abord, la technologie LIN permet de garantir le temps d'attente lors la transmission de signaux. Ce type de bus permet d'atteindre des débits de transmission relativement élevés, typiquement limités à 20 kbit/s pour des raisons liées aux interférences électromagnétiques.

Ensuite, les stations reliées sur le bus LIN selon le protocole de communication LIN, ne nécessitent aucun dispositif de synchronisation tel qu'un oscillateur local à base de cristal ou un résonateur en céramique. Ceci permet de réduire de manière significative le coût d'implémentation matérielle de ces stations. De plus, le coût de fabrication du bus LIN lui-même est peu couteux étant donné qu'il est mono-filaire.

Selon une autre caractéristique de l'invention, les interfaces homme-machine sont de type esclave et le calculateur central est de type maître.

Dans une architecture du type maître/esclave comprenant un module maître et une pluralité de modules esclaves, le module maître coordonne et contrôle la communication entre les différents modules esclaves qui exécutent notamment les actions que le module maître leur ordonne.

Avantageusement, ce type d'architecture ne nécessite pas de moyen d'arbitrage entre les différentes interfaces homme-machine pour l'émission et la réception sur le bus de communication série commun.

Selon une autre caractéristique de l'invention, le bus de communication série est un bus de type CAN (Controller Area Network).

Le bus de communication série de type CAN est un bus standard de communication dans le domaine automobile.

Le bus CAN peut être mis en oeuvre dans une architecture multi-maîtres, dans laquelle tout équipement maître peut amorcer le dialogue. De plus, le bus CAN permet d'atteindre des vitesses de transmission élevées (de 125 kbit/s à 1 Mbit/s selon la norme utilisée). Enfin, un même bus CAN permet de connecter un grand nombre d'équipements (32 à 100).

>

Les avantages et réalisations particulières de ce procédé sont les mêmes que ceux associés au dispositif client selon l'invention, décrit ci-avant.

Selon une caractéristique de l'invention, les troisièmes données d'état et les quatrièmes données d'état sont diffusées respectivement dans au moins une première trame et au moins une deuxième trame.

Plusieurs trames d'informations sont requises pour l'envoi d'un paquet de données de taille supérieur à 8 octets étant que la capacité de chaque trame d'information transmise est limitée à 8 octets, dans le cas de l'utilisation d'un bus CAN ou LIN.

Selon une autre caractéristique de l'invention, les troisièmes données d'état et les quatrièmes données d'état respectivement destinées à la au moins une interface homme-machine et audit au moins un module de commande d'équipement sont diffusées dans une même trame.

Avantageusement, ceci permet de minimiser le nombre de trames émises sur le bus de communication série et d'optimiser ainsi le trafic de données véhiculé sur le bus de communication série.

Selon une autre caractéristique de l'invention, le calculateur central diffuse au moins une trame de données génériques à la au moins une interface homme-machine pendant l'étape de traitement.

Ainsi, le calculateur central peut communiquer une information ou un état à afficher sur les IHMs sans avoir à attendre la fin de l'étape de traitement des données. Cette caractéristique permet, par exemple, d'informer les IHMs que le calculateur central est en train de traiter des données.

Selon une autre caractéristique de l'invention, le calculateur central traite les données émises par la au moins une interface homme-machine selon un algorithme de gestion de priorité.

Avantageusement, cet algorithme de gestion de priorité permet de résoudre les éventuels conflits entre les informations émises par une première IHM et celles émises par une deuxième IHM.

Selon une autre caractéristique de l'invention, les étapes du procédé sont réalisées de façon périodique.

Un séquencement périodique des étapes effectuées par le calculateur central selon l'invention, permet de garantir les temps de réponse du système et d'améliorer ainsi ses performances.

Dans un mode préféré de réalisation, les différentes étapes du procédé de communication sont déterminées par des instructions d'un programme informatique.

En conséquence, l'invention vise aussi un programme informatique enregistré sur un support d'information et le support lui-même.

Ce programme comporte des instructions de code adaptées à la mise en oeuvre des étapes du procédé de communication tel que décrit ci-dessus et exécutées sur le système de communication selon l'invention tel que décrit ci-dessus.

### Brève description des dessins

D'autres caractéristiques et avantages de la présente invention ressortiront de la description faite ci-dessous, en référence aux dessins qui en illustrent un exemple de réalisation dépourvu de tout caractère limitatif et dans lesquels :
- la figure 1, représente un système de communication par bus de communication série entre un module de commande et deux IHMs selon l'invention ;
- la figure 2 illustre le procédé de communication entre les entités de la figure 1 selon l'invention ; et
- la figure 3, conformément à l'état actuel de la technique, un système de communication entre deux modules de commandes, et trois IHMs, au moyen d'un bus de communication série.

### Description détaillée d'un mode de réalisation

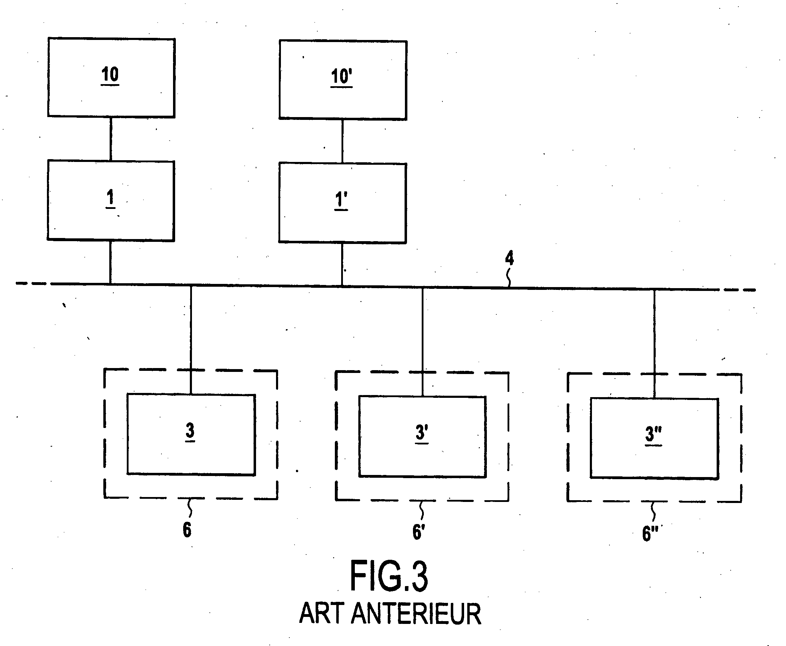

La figure 3 décrit, conformément à l'état actuel de la technique, un système de communication entre deux modules de commande 1, 1' reliés respectivement à deux équipements 10 et 10' et trois interfaces homme-machine (IHMs) 3, 3', 3" contenues respectivement dans trois tableaux de commandes 6, 6', 6". Un bus de communication série 4 de type LIN (Local Interconnect Network) relie les modules de commande 1, 1' aux IHMs 3, 3', 3".

Dans ce type d'architecture classique, les traitements liés à la logique des IHMs 3, 3', 3" sont effectués dans les modules de commande 1, 1'. Ces traitements sont effectués par des calculateurs contenus dans les modules de commande 1, 1' et adaptés aux IHMs 3, 3', 3", à partir des données fournies par ces IHMs 3, 3', 3".

Les traitements liés à la logique des IHMs 3, 3', 3" consistent à élaborer des états à afficher sur les IHMs 3, 3', 3", comme par exemple, des messages à afficher sur des écrans de signalisation, des voyants à allumer ou à éteindre, ou bien des données à prendre en compte dans un algorithme de calcul lié à un module de commande 1, 1' d'un équipement 10, 10'.

En effet, une modification de l'un quelconque des tableaux de commande 6, 6', 6", comme par exemple, le remplacement d'un bouton rotatif de commande de distribution par plusieurs boutons de type « push » peut induire des modifications au niveau des modules de commande 1, 1'.

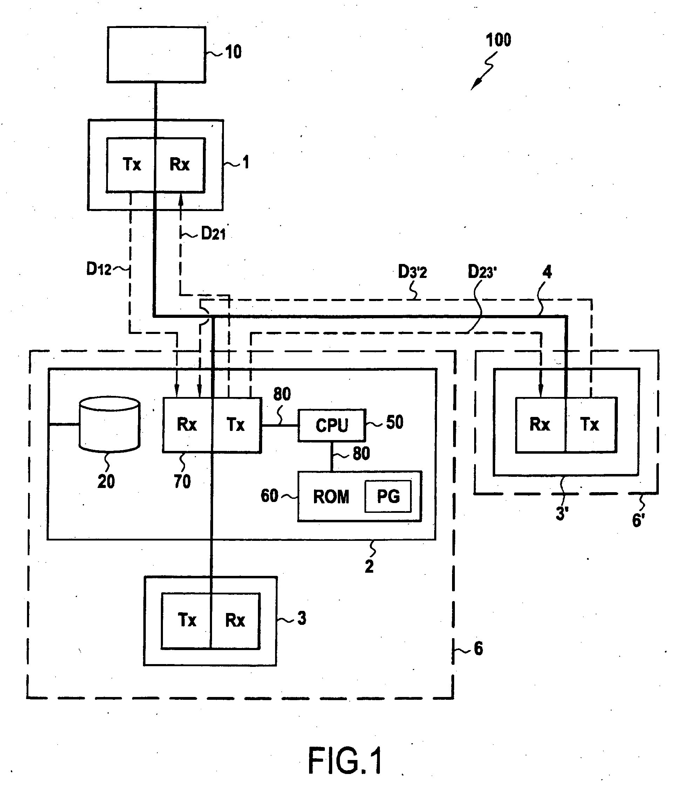

La figure 1 illustre un système de communication selon l'invention, à titre d'exemple, entre un module de commande 1 relié à un appareil de climatisation HVAC 10 et deux IHMs 3, 3'. Un premier tableau de commande 6 comprend une première IHM 3 et un calculateur central 2. Un deuxième tableau de commande 6' comprend une deuxième IHM 3'. Les deux tableaux de bord 6, 6' sont reliés au module de commande 1 par un même bus de communication série 4 de type LIN, par exemple.

Ainsi l'IHM 3' communique directement avec le calculateur central 2, au moyen du bus de communication série 4. Etant donné que l'IHM 3 et le calculateur central 2 sont, dans cet exemple, hébergés par le même tableau de commande 6, l'IHM 3 communique directement en interne avec le calculateur central 2, sans passer par le bus de communication série 4. Dans cet exemple, le calculateur central 2 communique donc directement avec l'IHM 3' et le module de commande 1 par l'intermédiaire du bus de communication série 4, et communique directement en interne avec l'IHM 3.

Selon l'invention, le système prévoit un calculateur central 2 relié à la première IHM 3 au moyen d'un bus de communication interne non référencé, dans le tableau de commande 6. Ce calculateur central 2 comprend également des moyens de stockage 20 permettant de stocker des informations de configuration. Ces informations de configuration permettent, par exemple, d'accorder un niveau de priorité aux informations fournies par les IHMs 3, 3' et le module de commande 1. Dans l'exemple décrit ici, le calculateur central 2 comprend une unité centrale (CPU) 50, une mémoire (ROM) 60, une interface de communication 70 et un système de bus 80 permettant de relier ces différentes unités entre elles.

L'interface de communication 70 inclue classiquement une unité fonctionnelle dialoguant en réception Rx et en transmission Tx avec le bus de communication série 4.

Dans l'exemple décrit ici, la mémoire 60 constitue le support de stockage d'informations qui mémorise un programme informatique PG conforme à l'invention, apte à mettre en oeuvre, lorsqu'il est exécuté par l'unité centrale 50, les étapes du procédé de communication conforme à l'invention.

Ce programme PG peut utiliser n'importe quel langage de programmation et peut être sous la forme de code source, code objet, ou de code intermédiaire entre code source et code objet, tel que dans une forme partiellement compilée, ou dans n'importe quelle autre forme souhaitable.

Le support de stockage 60 d'informations peut être n'importe quelle entité ou dispositif capable de stocker le programme informatique. Par exemple, le support peut comporter un moyen de stockage, tel qu'une ROM de circuit microélectronique.

Alternativement, le support de stockage d'informations peut être un circuit intégré dans lequel le programme est incorporé, le circuit étant adapté pour exécuter ou pour être utilisé dans l'exécution du procédé en question.

On notera que, d'un point de vue matériel, l'interface de communication (70) du calculateur central (2) est confondue avec l'interface de communication (non référencée) de l'IHM (3). Ainsi, il n'y a pas de différenciation entre l'interface de communication (70) du calculateur central (2) et l'interface de communication l'IHM (3). Selon une alternative de réalisation, la communication entre le calculateur central (2) et l'IHM (3) s'effectue directement au moyen d'un bus interne, sans passer par le bus de communication série (4).

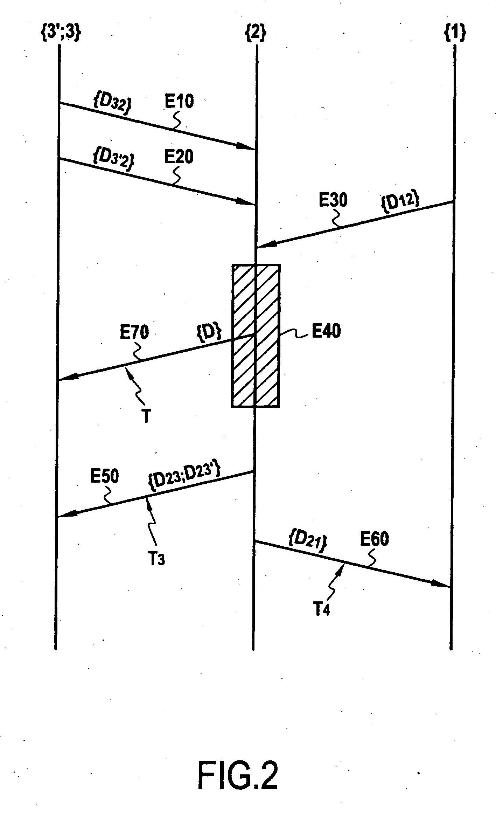

La figure 2 illustre le procédé de communication selon l'invention, entre les IHMs 3, 3' et le module de commande 1 de la figure 1. Les IHMs 3, 3' envoient séquentiellement leurs données d'état notées respectivement D32, D3'2 au calculateur central 2, selon les étapes E10 et E20 respectivement. Le calculateur central 2 reçoit et lit ces données de manière séquentielle. Le module de commande 1 envoie des données D12 au calculateur central 2, selon l'étape E30, par l'intermédiaire du bus de communication série 4 de la figure 1.

Les données d'état D32 et D3'2 sont des données qui représentent par exemple, des états d'activation ou des états de commande des IHMs 3 et 3' respectivement (par exemple, l'état d'activation ou la confirmation de l'appui d'un bouton poussoir, la position de rotation d'un bouton rotatif). Les données D12 fournies par le module de commande 1, sont des données représentant, par exemple, l'état de l'algorithme thermique ou l'état du véhicule. Les données D12 sont élaborées par le module de commande 1 à partir des informations reçues de capteurs du système de climatisation et d'états internes des algorithmes de régulation du confort de la climatisation.

A partir des données D12, D32, D3'2 reçues, le calculateur central 2 traite ces données selon une étape E40 de traitement logique lié aux IHMs. Lors de cette étape E40, le calculateur central 2 élabore les données d'état D23 et D23'. Ces données d'état D23 , D23' décrivent les états à afficher sur les IHMs 3 et 3' respectivement, tels que par exemple, un voyant à allumer ou à éteindre, une information explicite à afficher sur un écran.

Le calculateur central 2 élabore également les données D21 décrivant l'état à prendre en compte par l'algorithme thermique (ou algorithme de confort de la climatisation) au sein du module de commande 1.

Ainsi le traitement des données fournies par les IHMs 3, 3' et par le module de commande 1 de l'appareil de climatisation 10 est centralisé au niveau du calculateur central 2. Cette centralisation du traitement lié aux IHMs 3, 3' assure qu'en cas de modification du confort ou des performances du système de climatisation, seul le module de commande 1 a besoin d'être modifié.

Selon une caractéristique de l'invention, lors de cette étape E40, le calculateur central 2 prend en compte les éventuels conflits entre les données D32 et D3'2 selon un algorithme de gestion des priorités.

Ainsi, le traitement des données D12, D32, D3'2 selon l'étape E40 s'effectue selon l'algorithme de gestion de priorité et de traitement de la logique liée aux IHMs, tout en prenant en compte les informations de configuration contenues dans les moyens de stockage 20. Ces informations de configuration concernent par exemple, les niveaux de priorité à accorder aux différentes données D32, D3'2 fournies par les IHMs pour leur traitement selon l'étape E40 ou la répartition des données entre les IHMs 3, 3'.

Selon une étape E50, le calculateur central 2 diffuse les données D23, D23' aux IHMs 3 et 3', dans au moins une trame T3. Les IHMs 3 et 3' possèdent des moyens leur permettant de récupérer les données qui leur sont destinées (respectivement D23, D23'). Les données D21 sont ensuite émises, selon une étape E60, par le calculateur central 2 à destination du module de commande 1 dans une trame T4.

Selon une caractéristique de l'invention, le calculateur central 2 peut envoyer des données d'ordre général D aux IHMs 3, 3', selon une étape E70, dans au moins une trame générique T, lors de l'exécution de l'étape de traitement E40. Par exemple, suite à l'appui d'un bouton poussoir au niveau d'une des IHMs 3, 3' pour commander la mise en route de l'appareil de climatisation 10, des données D pour l'affichage d'un témoin lumineux peuvent être envoyées aux IHMs 3, 3' sans avoir à attendre la fin de l'étape de traitement E40.

Selon une autre caractéristique de l'invention, les étapes d'envoi E50 et E60 des données D23, D23' et D21, respectivement aux IHMs 3, 3' et au module de commande 1 d'équipement peuvent être remplacées par une étape unique selon laquelle ces données sont transmises dans une unique trame. Autrement dit, les trames T3 et T4 forment une même trame T5 non représentée.

Selon une autre caractéristique de l'invention, les étapes E10, E20, E30, E40, E70, E50 et E60 sont répétées de manière séquentielle.

Dans l'exemple ci-avant, seulement deux tableaux de commande 6, 6' ont été considérés. Pour l'extension à N tableaux de commande (N étant le nombre total de tableaux de commande reliés au bus de communication série 4), un seul tableau de commande hébergera en plus de son IHM, le calculateur central 2 avec ses données de configurations sauvegardées dans le moyen de stockage 20. La mise en oeuvre des N-1 autres IHMs et du module de commande 1 reste inchangée. Les échanges de données entre les IHMs, le module de commande 1 et le calculateur central 2, les traitements des données au niveau du calculateur central 2 restent inchangés par rapport à la mise en oeuvre décrite ci-avant.

Le mode de réalisation décrit ci-avant se rapporte à un système de climatisation. Néanmoins, d'autres modes de réalisation sont bien entendu possibles faisant intervenir d'autres équipements qu'un climatiseur, tout en restant, bien entendu, dans le cadre de l'invention. Parmi ces autres équipements, on peut citer, à titre d'exemple, un module audio, un module de téléphone ou un module télématique.

Dans un mode de réalisation comprenant une pluralité de modules de commande d'équipements et une pluralité d'IHMs, le calculateur central 2 a pour fonction de répartir les données générées par le calculateur central 2 vers la pluralité de modules de commande 1 de manière à ce que chaque module de commande reçoit les données qui lui sont destinées.

## Revendications

1. Système de communication (100) entre au moins un module de commande (1) d'équipement relié à un équipement (10), ledit module de commande (1) d'équipement étant aussi relié à une première interface homme-machine (3) et au moins une deuxième interface homme-machine (3') au moyen d'un bus de communication série (4), un premier tableau de commande (6) comprenant la première interface homme-machine (3) et un deuxième tableau de commande (6') comprenant une deuxième interface homme-machine (3'),
le premier tableau de commande (6) comprend un calculateur central (2) comportant des moyens adaptés à :
- recevoir au moins des premières données d'état (D32, D3'2) émises par la première interface homme-machine (3) et par la deuxième interface homme-machine (3') et au moins des secondes données d'état (D12) émises par le module de commande (1) d'équipement;
- traiter les premières (D32, D3'2) et secondes (D12) données d'état de manière à produire au moins des troisièmes (D23, D23') et quatrièmes (D21) données d'état respectivement destinées à la première interface homme-machine (3), à la deuxième interface homme-machine (3') et au module de commande (1) d'équipement;
- diffuser les troisièmes données d'état (D23, D23') à la première interface homme-machine (3) et à la deuxième interface homme-machine (3'); et
- diffuser les quatrièmes données d'état (D21) au module de commande (1) d'équipement.

2. Système de communication selon la revendication 1, **caractérisé en ce que** le calculateur central (2) comprend un moyen de stockage (20) permettant de stocker des informations de configuration.

3. Système de communication selon l'une quelconque des revendications précédentes, **caractérisé en ce que** le bus de communication série (4) est un bus de type LIN (Local Interconnect Network).

4. Système de communication selon la revendication 3, **caractérisé en ce que** l'interface homme-machine (3) est de type esclave et **en ce que** le calculateur central (2) est de type maître.

5. Système de communication selon la revendications 1 ou 2, **caractérisé en ce que** le bus de communication série (4) est un bus de type CAN (Controller Area Network).

6. Procédé de communication entre un calculateur central (2), au moins un module de commande (1) d'équipement relié à un équipement (10), une première interface homme-machine (3) et au moins une deuxième interface homme-machine (3') contenue dans un deuxième tableau de commande (6'), ledit calculateur central (2) étant placé dans un premier tableau de commande (6) comprenant ladite première interface homme-machine (3), ledit au moins un module de commande (1) d'équipement étant relié à ladite première interface homme-machine (3) et à ladite au moins deuxième interface homme-machine (3') au moyen d'un bus de communication série (4), procédé de communication selon lequel le calculateur central effectue les étapes suivantes:
- réception (E10, E20, E30) de au moins des premières données d'état (D32 , D3'2) émises par la première interface homme-machine (3) et par la deuxième interface homme-machine (3') et de au moins des secondes données d'état (D12) émises par le module de commande (1) d'équipement ;
- traitement (E40) des premières données d'état (D32, D3'2) et des secondes données d'état (D12), de manière à générer au moins des troisièmes données d'état (D23, D23') et quatrièmes données d'état (D21) respectivement destinées à la première interface homme-machine (3), à la deuxième interface homme-machine (3') et au module de commande (1) d'équipement ;
- diffusion (E50) des troisièmes données d'état (D23, D23') à l'interface homme-machine (3, 3') ; et
- diffusion (E60) des quatrièmes données d'état (D21) au module de commande (1) d'équipement.

7. Procédé selon la revendication 6, **caractérisé en ce que** les troisièmes données d'état (D23 , D23') et les quatrièmes données d'état (D21) sont diffusées respectivement dans au moins une trame (T3) et au moins une trame (T4)

8. Procédé selon la revendication 7, **caractérisé en ce que** la trame (T3) et la trame (T4) forment une même trame (T5).

9. Procédé selon l'une quelconque des revendications 6 à 8, **caractérisé en ce que** le calculateur central (2) diffuse (E70) des données génériques (D) dans au moins une trame (T) à l'interface homme-machine (3, 3') pendant ladite étape (E40) de traitement des données.

10. Procédé selon l'une quelconque des revendications 6 à 9, **caractérisé en ce que** le calculateur central (2) traite les données (D32, D3'2) émises par l'interface homme-machine (3, 3') selon un algorithme de gestion de priorité.

11. Procédé selon l'une quelconque des revendications 6 à 10, **caractérisé en ce que** les étapes (E10, E20, E30, E40, E50, E60) du procédé sont réalisées de façon périodique.

12. Programme informatique (PG) comportant des instructions de code aptes à réaliser les étapes du procédé de communication selon l'une quelconque des revendications 6 à 12 lorsque le programme (PG) est exécuté sur le système de communication selon l'une quelconque des revendications 1 à 5.

13. Support de stockage d'informations (60) sur lequel est enregistré un programme informatique (PG) comprenant des instructions de code aptes à réaliser les étapes du procédé de communication selon l'une quelconque des revendications 6 à 11.

## Patentansprüche

1. Kommunikationssystem (100) zwischen mindestens einem Ausrüstungssteuermodul (1), das mit einer Ausrüstung (10) verbunden ist, wobei das Ausrüstungssteuermodul (1) auch mit einer ersten Mensch-Maschine-Schnittstelle (3) und mindestens einer zweiten Mensch-Maschine-Schnittstelle (3`) mit Hilfe eines Serien-Kommunikationsbusses (4) verbunden ist, wobei eine erste Steuertafel (6) die erste Mensch-Maschine-Schnittstelle (3) und eine zweite Steuertafel (6') die zweite Mensch-Maschine-Schnittstelle (3') umfasst, wobei die erste Steuertafel (6) einen Zentralrechner (2) besitzt, umfassend Mittel, die geeignet sind:
- mindestens erste Zustandsdaten (D32, D3'2) zu empfangen, die von der ersten Mensch-Maschine-Schnittstelle (3) und von der zweiten Mensch-Maschine-Schnittstelle (3`) entsandt werden, und mindestens zweite Zustandsdaten (D12) zu empfangen, die von dem Ausrüstungssteuermodul (1) entsandt werden;
- die ersten (D32, D3`2) und zweiten (D12) Zustandsdaten zu verarbeiten, um mindestens dritte (D23, D23`) und vierte (D21) Zustandsdaten zu erzeugen, die für die erste Mensch-Maschine-Schnittstelle (3), für die zweite Mensch-Maschine-Schnittstelle (3') bzw. das Ausrüstungssteuermodul (1) bestimmt sind;
- die dritten Zustandsdaten (D23, D23') an die erste Mensch-Maschine-Schnittstelle (3) und die zweite Mensch-Maschine-Schnittstelle (3') zu verbreiten; und
- die vierten Zustandsdaten (D21) an das Ausrüstungssteuermodul (1) zu verbreiten.

2. Kommunikationssystem nach Anspruch 1, **dadurch gekennzeichnet, dass** der Zentralrechner (2) ein Speichermittel (20) umfasst, das es ermöglicht, Konfigurationsinformationen zu speichern.

3. Kommunikationssystem nach einem der vorhergehenden Ansprüche, **dadurch gekennzeichnet, dass** der Serien-Kommunikationsbus (4) ein Bus des Typs LIN (Local Interconnect Network) ist.

4. Kommunikationssystem nach Anspruch 3, **dadurch gekennzeichnet, dass** die Mensch-Maschine-Schnittstelle (3) vom Slave-Typ ist, und dass der Zentralrechner (2) vom Master-Typ ist.

5. Kommunikationssystem nach Anspruch 1 oder 2, **dadurch gekennzeichnet, dass** der Serien-Kommunikationsbus (4) ein Bus des Typs CAN (Controller Area Network) ist.

6. Kommunikationsverfahren zwischen einem Zentralrechner (2), mindestens einem Ausrüstungssteuermodul (1), das mit einer Ausrüstung (10) verbunden ist, einer ersten Mensch-Maschine-Schnittstelle (3) und mindestens einer zweiten Mensch-Maschine-Schnittstelle (3'), die in einer zweiten Steuertafel (6') enthalten ist, wobei der Zentralrechner (2) in einer ersten Steuertafel (6) angeordnet ist, umfassend die erste Mensch-Maschine-Schnittstelle (3), wobei das mindestens eine Ausrüstungssteuermodul (1) mit der ersten Mensch-Maschine-Schnittstelle (3) und der mindestens zweiten Mensch-Maschine-Schnittstelle (3') mit Hilfe eines Serien-Kommunikationsbusses (4) verbunden ist, wobei bei diesem Kommunikationsverfahren der Zentralrechner die folgenden Schritte ausführt:
- Empfang (E10, E20, E30) mindestens erster Zustandsdaten (D32, D3'2), die von der ersten Mensch-Maschine-Schnittstelle (3) und von der zweiten Mensch-Maschine-Schnittstelle (3') entsandt werden, und mindestens zweiter Zustandsdaten (D12), die von dem Ausrüstungssteuermodul (1) entsandt werden;
- Verarbeitung (E40) der ersten Zustandsdaten (D32, D3'2) und zweiten Zustandsdaten (D12), um mindestens dritte Zustandsdaten (D23, D23') und vierte Zustandsdaten (D21) zu erzeugen, die für die erste Mensch-Maschine-Schnittstelle (3), für die zweite Mensch-Maschine-Schnittstelle (3') und das Ausrüstungssteuermodul (1) bestimmt sind;
- Verbreitung (E50) der dritten Zustandsdaten (D23, D23') an die Mensch-Maschine-Schnittstelle (3, 3'); und
- Verbreitung (E60) der vierten Zustandsdaten (D21) an das Ausrüstungssteuermodul (1).

7. Verfahren nach Anspruch 6, **dadurch gekennzeichnet, dass** die dritten Zustandsdaten (D23, D23') und die vierten Zustandsdaten (D21) in mindestens einen Raster (T3) bzw. mindestens einen Raster (T4) verbreitet werden.

8. Verfahren nach Anspruch 7, **dadurch gekennzeichnet, dass** der Raster (T3) und der Raster (T4) einen selben Raster (T5) bilden.

9. Verfahren nach einem der Ansprüche 6 bis 8, **dadurch gekennzeichnet, dass** der Zentralrechner (2) generische Daten (D) in mindestens einen Raster (T) an der Mensch-Maschine-Schnittstelle (3, 3') während des Schrittes (E40) der Datenverarbeitung verbreitet (E70).

10. Verfahren nach einem der Ansprüche 6 bis 9, **dadurch gekennzeichnet, dass** der Zentralrechner (2) die von der Mensch-Maschine-Schnittstelle (3, 3') entsandten Daten (D32, D3'2) nach einem Prioritätsverwaltungsalgorithmus verarbeitet.

11. Verfahren nach einem der Ansprüche 6 bis 10, **dadurch gekennzeichnet, dass** die Schritte (E10, E20, E30, E40, E50, E60) des Verfahrens periodisch durchgeführt werden.

12. Informatikprogramm (PG), umfassend Codebefehle, die geeignet sind, die Schritte des Kommunikationsverfahrens nach einem der Ansprüche 6 bis 11 durchzuführen, wenn das Programm (PG) auf dem Kommunikationssystem nach einem der Ansprüche 1 bis 5 ausgeführt wird.

13. Informationsspeicherträger (60), auf dem ein Informatikprogramm (PG) gespeichert ist, umfassend Codebefehle, die geeignet sind, die Schritte des Kommunikationsverfahrens ach einem der Ansprüche 6 bis 11 durchzuführen.

## Claims

1. System of communication (100) between at least one equipment control module (1) linked to an equipment item (10), said equipment control module (1) being also linked to a first man-machine interface (3) and to at least one second man-machine interface (3') by means of a serial communication bus (4), a first control panel (6) comprising the first man-machine interface (3) and a second control panel (6') comprising the second man-machine interface (3'),
the first control panel (6) comprising a central computer (2) comprising means suitable for:
- receiving at least first status data items (D32, D3'2) transmitted via the first man-machine interface (3) and via the second man-machine interface (3') and at least second status data items (D12) transmitted by the equipment control module (1);
- processing the first (D32, D3'2) and second (D12) status data items so as to produce at least third (D23, D23') and fourth (D21) status data items respectively intended for the first man-machine interface (3), for the second man-machine interface (3') and for the equipment control module (1);
- broadcasting the third status data items (D23, D23') to the first man-machine interface (3) and to the second man-machine interface (3'); and
- broadcasting the fourth status data items (D21) to the equipment control module (1).

2. System of communication according to Claim 1, **characterized in that** the central computer (2) comprises a storage means (20) with which to store configuration information.

3. System of communication according to either of the preceding claims, **characterized in that** the serial communication bus (4) is an LIN (Local Interconnect Network) type bus.

4. System of communication according to Claim 3, **characterized in that** the man-machine interface (3) is of slave type and **in that** the central computer (2) is of master type.

5. System of communication according to Claim 1 or 2, **characterized in that** the serial communication bus (4) is a CAN (Controller Area Network) type bus.

6. Method of communication between a central computer (2), at least one equipment control module (1) linked to an equipment item (10), a first man-machine interface (3) and at least one second man-machine interface (3') contained in a second control panel (6'), said central computer (2) being placed in a first control panel (6) comprising said first man-machine interface (3), said at least one equipment control module (1) linked to said first man-machine interface (3) and to said at least one second man-machine interface (3') by means of a serial communication bus (4), a communication method according to which the central computer (2) performs the following steps:
- reception (E10, E20, E30) of at least first status data items (D32, D3'2) transmitted via the first man-machine interface (3) and via the second man-machine interface (3') and at least second status data items (D12) transmitted by the equipment control module (1);
- processing (E40) of the first status data items (D32, D3'2) and second status data items (D12), so as to generate at least third status data items (D23, D23') and fourth status data items (D21) respectively intended for the first man-machine interface (3), for the second man-machine interface (3') and the equipment control module (1);
- broadcasting (E50) of the third status data items (D23, D23') to the man-machine interface (3, 3'); and
- broadcasting (E60) of the fourth status data items (D21) to the equipment control module (1).

7. Method according to Claim 6, **characterized in that** the third status data items (D23, D23') and the fourth status data items (D21) are broadcast respectively in at least one frame (T3) and at least one frame (T4).

8. Method according to Claim 7, **characterized in that** the frame (T3) and the frame (T4) form one and the same frame (T5).

9. Method according to any one of Claims 6 to 8, **characterized in that** the central computer (2) broadcasts (E70) generic data items (D) in at least one frame (T) to the man-machine interface (3, 3') during said data processing step (E40).

10. Method according to any one of Claims 6 to 9, **characterized in that** the central computer (2) processes the data items (D32, D3'2) transmitted via the man-machine interface (3, 3') according to a priority management algorithm.

11. Method according to any one of Claims 6 to 10, **characterized in that** the steps (E10, E20, E30, E40, E50, E60) of the method are performed periodically.

12. Computer program (PG) comprising code instructions suitable for performing the steps of the communication method according to any one of Claims 6 to 11 when the program (PG) is executed on the system of communication according to any one of Claims 1 to 5.

13. Information storage medium (60) on which is stored a computer program (PG) comprising code instructions suitable for performing the steps of the communication method according to any one of Claims 6 to 11.
